# EUROPEAN PATENT SPECIFICATION

(11) **EP 2 854 066 B1**
(45) Date of publication and mention of the grant of the patent: **28.02.2018**
(21) Application number: 13181243.0
(22) Date of filing: 21.08.2013
(51) Int. Cl.: G06F 21/57

(54) **System and method for firmware integrity verification using multiple keys and OTP memory**
System und Verfahren zur Kontrolle der Integrität von Firmware mit Benutzung von mehreren Schlüsseln und OTP-Speicher
Système et méthode de vérification de l'intégrité du firmware en utilisant plusieurs clés et mémoire OTP

(43) Date of publication of application: 01.04.2015
(73) Proprietor: NXP B.V., 5656 AG Eindhoven (NL)
(72) Inventor: Peeters, Michaël, Redhill, Surrey RH1 1SH (GB); Debast, Claude, Redhill, Surrey RH1 1SH (GB); Jaladeau, Laurent, Redhill, Surrey RH1 1SH (GB)
(74) Representative: Miles, John Richard

(56) References cited:
- WO-A2-2011/119985
- US-A1- 2010 178 977
- US-A1- 2011 113 181
- US-A1- 2013 111 203
- ARM LIMITED: "ARM Security Technology - Building a Secure System using TrustZone Technology", INTERNET CITATION, 30 April 2009 (2009-04-30), pages I-XII,1, XP002660015, Retrieved from the Internet: URL:http://infocenter.arm.com/help/topic/c om.arm.doc.prd29-genc-009492c/PRD29-GENC-0 09492C_trustzone_security_whitepaper.pdf [retrieved on 2011-09-27]
- Steven Sinofsky: "Protecting the pre-OS environment with UEFI", msdn.com, 23 September 2011 (2011-09-23), XP055087793, Retrieved from the Internet: URL:http://blogs.msdn.com/b/b8/archive/201 1/09/22/protecting-the-pre-os-environment- with-uefi.aspx [retrieved on 2013-11-12]
- ARBAUGH W A ET AL: "A secure and reliable bootstrap architecture", SECURITY AND PRIVACY, 1997. PROCEEDINGS., 1997 IEEE SYMPOSIUM ON OAKLAND, CA, USA 4-7 MAY 1997, LOS ALAMITOS, CA, USA,IEEE COMPUT. SOC, US, 4 May 1997 (1997-05-04), pages 65-71, XP010230143, DOI: 10.1109/SECPRI.1997.601317 ISBN: 978-0-8186-7828-8
- S Qing ET AL: "BIOS Security Analysis and a Kind of Trusted BIOS", LNCS, 15 December 2007 (2007-12-15), pages 427-437, XP055086228, Retrieved from the Internet: URL:http://rd.springer.com/content/pdf/10. 1007/978-3-540-77048-0_33.pdf [retrieved on 2013-10-31]

## Description

### FIELD OF THE INVENTION

This invention relates to processing systems, and more particularly to controlling access of a processing unit of a processing system to firmware stored by the processing system.

### BACKGROUND

Security is an important consideration for processing systems such as microcontrollers. For example, it may be desirable to ensure that a processor only executes a specific task which is described by a piece of executable program code (or equivalent set of instructions, such as a script for example). However, the code and/or execution of the code may be subject to attacks. Attacks may include any of the following exemplary list:
- unauthorized modification of stored program code;
- modification of code during execution;
- code dumping (e.g. reading out code for the purposes of reverse engineering);
- unauthorized changing of memory access privileges;
- execution of unauthorized code from data segments

Firmware, for example basic input/output system (BIOS) code or core system software code, is typically operative to recognize and initialize hardware subsystems and components of a processing system or electronic device. Consequently, reverse engineering of firmware by a third-party may provide indications of hardware architecture of a system employing the firmware integrated circuit. Also, successful attacks (such as those listed above) on firmware may enable a third-party to alter the operation of a processing system, prevent the processing system from operating correctly, and/or transmit viruses to components or other systems/devices.

It is known to protect firmware using hardware-based security, such as storing firmware in non-volatile memory (such as Read-Only-Memory, ROM, for example) so that it cannot be modified within the memory. However, this may not provide adequate protection from a third-party accessing the firmware and analysing it for undesired or unauthorized purposes.

It is known to provide a security feature known as "Secure Boot" on embedded devices that attempts to ensure that processor only executes firmware that is authorized by the issuer of the device. The Secure Boot process employs a cryptographic key to verify the integrity of the firmware. The integrity of firmware is verified using a verification algorithm which performs a function on the firmware and checks the outcome of the function against a cryptographic key. If the verification algorithm verifies the integrity of firmware, the processor is allowed to execute the firmware.

The Secure Boot concept thus attempts to provide protection against passive attacks or software attacks that happen before a reset, for example, in the absence of exploitable bugs in the firmware. To comply with such a security model, the Secure Boot relies on a root of trust in hardware.

The conventional Secure Boot concept has the following shortcomings:
- Firmware verification key requires more One-Time Programmable (OTP) memory: Using a verification key requires much more OTP memory and/or requires the use of a cryptographic algorithm which is uncommon in low cost devices, even in software. For instance, an exemplary signature may require 2048-bit keys in order to be considered secure for the next two or three decades.
- There is a risk of key compromise: Even if the underlying cryptographic algorithm is strong, the key may still be compromised, due to improper protection and/or incorrect handling during a firmware update, for example. The robustness of the Secure Boot mechanism thus relies on the robustness of the procedures put in place to protect the confidentiality of the key. If the key is compromised, it may not be possible to prevent unauthorized firmware from being executed.

WO2011/119985A2 describes a method for authenticating and deciphering an encrypted program file for execution by a secure element which includes receiving the program file and a digital certificate that is associated with the program file from an external device. The method stores the program file and the associated certificate in a secure random access memory disposed in the secure element and hashes the program file to obtain a hash. The method authenticates the program file by comparing the obtained hash with a checksum that is stored in the certificate. Additionally, the method writes runtime configuration information stored in the certificate to corresponding configuration registers disposed in the secure element. The method further generates an encryption key using a seed value stored in the certificate and a unique identifier disposed in the secure element and deciphers the program file using the generated encryption key.

ARM LIMITED: "ARM Security Technology - Building a Secure System using TrustZone Technology", INTERNET CITATION, 30 April 2009 (2009-04-30), pages I-XII, 1, XP002660015, Retrieved from the Internet: URL:http://infocenter.arm.com/help/topic/com.arm.doc.prd29-genc-009492c/PRD29-GENC-009492C trustzone security whitepaper.pdf [retrieved on 2011-09-27] provides an overview of the ARM TrustZone technology and how this can provide a practical level of security through careful System-on-a-Chip (SoC) configuration and software design.

US2011/0113181A1 describes a system and method for updating a basic input output system (BIOS). An exemplary method comprises obtaining a BIOS update package comprising a BIOS image update, a BIOS Signature, and a plurality of Public Key regions, wherein each Public Key region comprises a Public Key area and a signature area. The exemplary method also comprises updating a current Public Key with a new Public Key if the new Public Key is identified in one of the Public Key regions. The exemplary method additionally comprises validating the BIOS Signature using the current Public Key.

### SUMMARY

According to one aspect of the invention, there is provided a method as defined by claim 1.

According to another aspect of the invention, there is provided a computer program product as defined by claim 11.

According to another aspect of the invention, there is provided a processing system as defined by claim 12.

According to an embodiment of the disclosure, there is provided a method of controlling access of a processing unit of a processing system to firmware code stored by a memory of the processing system, the method comprising the steps of: identifying a valid key stored in a first region of memory based on validation data of a second region of the memory, the validation data indicating whether a key is valid or not; processing the firmware code in accordance with a predetermined verification algorithm to compute a verification value for the firmware code; analysing the verification value and the valid key to determine if the firmware code is trusted; and controlling access of the processing unit to the firmware code based on whether the firmware code is determined to be trusted or not.

Thus, there is proposed a concept for controlling access to firmware code of a processing system. Embodiments may employ multiple keys which provide embedded and secured firmware execution within a system-on-chip system. Embodiments may therefore restrict or prevent execution of firmware code.

In an embodiment, if it is determined that the firmware code is not trusted, validation data of the second region of memory may be modified to indicate that the key is no longer valid. Thus, a compromised key may be detected and preventative action taken so as to render the compromised key invalid.

A plurality of keys may be employed so that a new key can be used after a previous key has been compromised or has expired. This may allow embodiments to remain functional and secure for longer time periods than systems employing conventional security concept such as Secure Boot.

The validation data of the second region of memory may simply comprise a flag or bit value for each key which indicates whether the key is valid or not. Also, the second region of memory may comprise one-time programmable memory so that once validation data has been modified (e.g. to indicate that a key is not valid) it cannot be modified further. This may help to prevent the validation data being unauthorised modification.

In an embodiment, it may be determined that the valid key is an end-of-life key which indicates that there are no more valid keys stored in the first region of memory. If it is determined that the valid key is an end-of-life key, a predetermined end-of-life algorithm may be executed. In this way, embodiments may employ a concept which addresses a situation where all keys have been compromised. The end-of-life algorithm may, for example, permanently disable the processing system so that is can no longer be used.

In embodiments, the first region of memory may comprise non-volatile memory, and the second region of memory may comprise OTP memory. Use of OTP memory for the second region of memory may enable validation data to be modified only a single time so as to allow key validity to be changed from valid to invalid and then no longer changed after that. Thus, it may be possible to invalidate a key (assuming they are all marked valid after issuance), but then impossible to revert the operation (e.g. to validate a key that has been marked 'invalid'). This may help to ensure that the keys remain invalidated even in the case of software attacks.

Trusted memory of the processing system may comprise ROM so that it is protected from being modified using hardware-based security.

According to another aspect of the disclosure there is provided a computer program product for controlling access of a processing unit of a processing system to firmware code stored by a memory of the processing system. The computer program product may comprise a computer-readable storage medium having computer-readable program code embodied therewith, the computer-readable program code configured to perform all of the steps of a method according to an embodiment of the disclosure.

According to yet another aspect of the disclosure there is provided a processing system.

The system may be adapted to modify data of the second memory region so that the key is no longer valid if it is determined that the firmware code is not trusted.

In embodiments, the system may be adapted to determine if the valid key is an end-of-life key indicating that there are no more valid keys stored in the first memory region. If it is determined that the valid key is an end-of-life key, the system may execute a predetermined end-of-life algorithm.

The processing system may be a microcontroller, a microprocessor, a microchip or a processing platform. Therefore the processor may be a central processing unit (CPU) or a processor core.

Proposed embodiments may employ components that are typically present in a processing system (a processor unit or CPU, memory, and peripherals, all connected by a communication bus/bridge). The invention is described by the appended claims.

### BRIEF DESCRIPTION OF THE DRAWINGS

Preferred embodiments of the present invention will now be described, by way of example only, with reference to the following drawings in which:
Figure 1 is a schematic block diagram depicting the memory regions of a processing system employing a conventional Secure Boot process;
Figure 2 is a schematic block diagram depicting the memory regions of a processing system according to an embodiment;
Figure 3 depicts an example of invalidating a key according to an embodiment;
Figure 4 is a flow diagram of a method according to an embodiment;
Figure 5 is a flow diagram of a method according to another embodiment; and
Figure 6 is a schematic block diagram of a system according to an embodiment of the invention.

### DETAILED DESCRIPTION OF THE EMBODIMENTS

Here, reference to firmware code should be understood to mean a combination of persistent memory and program code and data stored in it, such as the BIOS code or core system software code for a processing system, which is typically provided in non-volatile memory by the manufacturer or supplier of the processing system. Firmware code is different from application code in that application code is typically designed to implement higher-level or supplementary functions in addition to the function(s) provided by firmware code, and application code is typically a set of machine-readable instructions (most often in the form of a computer program) stored on volatile memory that directs a processor to perform specific operations. Thus, firmware code is typically permanently stored in hardware (specifically in non-volatile memory), whereas application code is typically stored in volatile or programmable memory so that can be modified.

Put another way, firmware code is inherited by a hardware implementation, independent from its application. Two different types of services are supported by firmware code: Low-Level services, including generic interface control handling and the hardware abstraction layer (register control, power management, etc.); and Secure private functions, including a boot sequence, services protected (e.g. access-restriction) from an end user, and system supervision. This code is typically protected from an end user (to prevent unauthorised modification for example).

Conversely, application code is dedicated to a final use of the processing system, independent from the hardware implementation solution. Any application code can be developed by reusing the low-layer level functions (part of firmware code).

In the next section, we consider the case of low cost embedded devices with a single central processor (or CPU), a Boot Read-Only Memory (ROM) region, and a One-Time-Programmable (OTP) memory region. The Boot ROM is the initial hardware root of trust. The Boot ROM will typically contain bootstrap software that is executed by the processor right after reset. Since the bootstrap software is stored in ROM that is protected from modification, there may be no need to verify the boot strap software. The role of the OTP memory is similar to Boot ROM (e.g. to provide a hardware root of trust), but is programmable (a single time) so that the manufacturer may configure options or parameters of the system. Without OTP, there may be no diversity between devices and, thus, all CPUs with the same Boot ROM may only boot one and the same firmware. The kind of OTP memory may depends on the actual security model. Typically, OTP memory only supports bit programming in one direction (e.g. from 1 to 0), and there is usually an additional OTP Lock flag in OTP memory that prevents further writing in OTP after it has been programmed. There is no way to revert the locking by any software or hardware means.

On-chip solutions (e.g. ROM and OTP on the same die or at least in the same package as the CPU) may offer better protection than off-chip solutions (e.g. separate discrete components), but if one only considers software attacks, both solutions are identical.

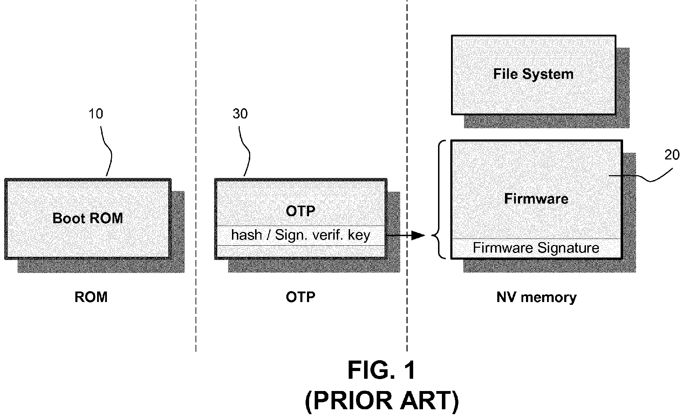

Referring now to Figure 1, there is firstly provided a high-level description of the conventional Secure Boot process as programmed in the Boot ROM 10. This conventional security approach relies on the computation of a "digest" (or authentication value) of the firmware binary code 20, and then the comparison of that digest with a reference key value stored in OTP 30. To provide significant protection, the digest function is preferably a state-of-the-art cryptographic one-way function (for example, a so-called cryptographic hash function like the SHA-1/2/3 standards), and such that: (i) it is extremely difficult to find two binaries that gives the exact same digest value; and (ii) it is extremely difficult given a digest value to find a binary that gives that same value after hashing,

The proposed concept may provide same flexibility as the conventional Secure Boot process depicted in Figure 1, but may also allow reaction in case of key compromise. Furthermore, it may only require a little more OTP memory than the conventional Secure Boot process. Also, the proposed concept may maintain the simplicity of the firmware update process and may not require additional software interfaces.

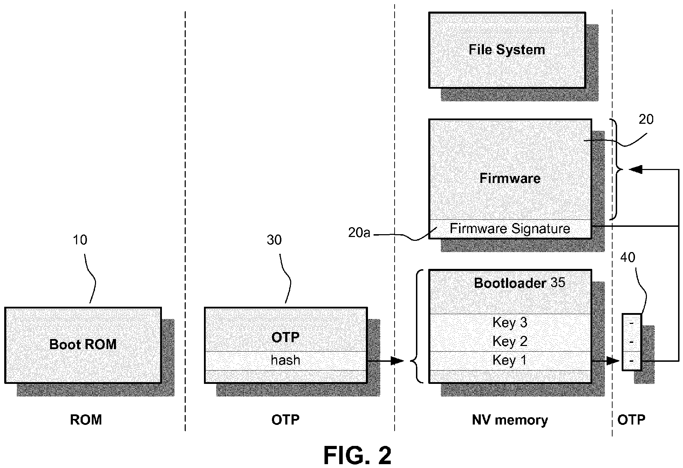

Figure 2 is a schematic block diagram depicting the memory regions of a processing system according to an embodiment.

The proposed concept for dealing with key compromise is to allow for several firmware signature keys. Embodiments may allow for this whilst minimizing the impact on OTP memory.

Proposed is the addition of another step in the boot sequence. In the first step, the Boot ROM loads the code and data of a Boot Loader, the integrity of which is protected via a hash stored in OTP. In the second step, the Boot Loader loads the code and data of the firmware, the integrity of which is protected via a signature. This two-step approach benefits from low hardware impact and maximal security guarantee of a hash-based Secure Boot, while still allowing for the flexibility offered by a signature-based Secure Boot.

Splitting the boot sequence into two steps may not resolve the issue of key compromise. To address this, it is proposed to employ a plurality of signature verification keys in the boot loader 35. This allows the issuance of firmware code signed with a new key when the previous key is considered compromised or invalid. The integrity of all signature verification keys may be protected by the hash function in OTP since it covers the whole Boot Loader 35 code and data. It may therefore not be possible to tamper with the keys nor to change the set of trusted keys after issuance of the device/system. Thus, for some embodiments, the system manufacturer may have to carefully choose the number of keys panned for the lifetime of the system. However, since the Boot Loader 35 and keys can be stored in regular Non-Volatile (NV) memory, the cost of additional keys may be negligible.

When a key is compromised, there is provided a way to tell the Boot Loader 35 not to use such a key. This is done by assigning a validity bit 40 for each key. Prior to using a key for verification of the firmware signature, the Boot Loader 35 first reads the validity bit 40 for that key from the OTP, and only uses that key if it is identified as being valid.

By storing the validity bits in the OTP it is possible to invalidate a key (assuming they are all marked valid after issuance), but it is then not possible to revert the operation (e.g. to validate a key that has been marked 'invalid'). The simplicity of this mechanism may reduce the overhead in OTP memory usage to a minimum.

In embodiments, when the Boot Loader 35 successfully verifies the firmware 20 signature 20a with a given key in the key store, it may, prior executing that firmware 20, mark all previous keys in the key store as invalid. Thus, the manufacturer may easily invalidate a key remotely by issuing a new firmware (or the same firmware) signed with the next key in the key store.

It is noted that since the Boot Loader 35 code may not be updated, it is preferable that this code is as simple as possible in order to reduce the odds of finding an exploitable bug. Also, in order to prevent denial-of-service attacks, it is preferable that prior to executing the firmware 20, the Boot Loader 35 locks write access to the OTP memory. This way even if some malicious software could gain privileged access through an exploit, it cannot tamper with the validity bits 40.

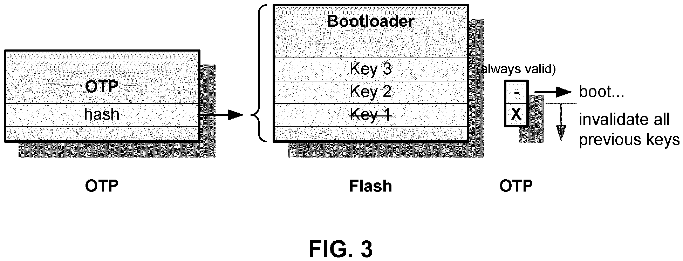

In preferred embodiments, the validity bit of previous keys is updated before running the new firmware. This is depicted in Figure 3 which illustrates an example of invalidating a key according to an embodiment. Here the verification data of the OTP is modified so that the validity bit for the previous key (key1) is changed to a value (e.g. logical zero) which indicates that it is invalid. This may help to ensure that the keys are invalidated even in the case of software attacks.

It is noted that modern firmware update processes usually include a recovery mechanism that allows fall-back to the previous firmware in case the new firmware does not boot properly. The usual practice is to keep a copy of the previous firmware in memory, and boot that one if a problem is detected (this of course requires a CPU reset). The proposed key invalidation mechanism may interfere with that mechanism since the boot loader will no longer accept to boot the previous firmware. In order to not reduce the robustness of the key invalidation mechanism, it is proposed to use the same firmware as currently loaded in the device when invalidating a key. This simply consists in updating the signature in the device. This way there is no risk that the device fails to boot properly after key invalidation. If the firmware must also be updated, this should be done in two phases: first update the signature using the next key (keeping same firmware binary), then update both signature and firmware.

Method steps of an exemplary embodiment may be summarised as follows:

### SETUP

i) Generate new boot loader code M_{BL}
ii) Generate a set of n private / public key pairs {SKᵢ,PKᵢ} (i = 1..n)
iii) Compute digest over the boot loader code and key store, H_{BL} = HASH(M_{BL} |PK₁| ... |PKₙ)
iv) Write the digest H_{BL} into device OTP, and the boot loader code and key store M_{BL}|PK₁| ... |PKₙ into device NV memory
v) Keep the private keys {SKᵢ} in a secure location with strict access control
vi) Keep index of the current active private key. Let current = 1.

### KEY COMPROMISE

This process is executed if key SKⱼ is compromised, where j ≥ current.
i) Let current = j + 1
ii) Compute firmware signature SFW=SIGN_{SK,current}(M_{FW})
   Note that we reuse the same firmware as currently loaded in the device.
iii) Write the signature S_{FW} into device NV memory

### FIRMWARE WRITE / UPDATE

i) Generate new firmware M_{FW}
ii) Compute firmware signature S_{FW}=SIGN_{SK,current}(M_{FW}).
iii) Write the firmware M_{FW} and signature S_{FW} into device NV memory

### BOOT LOADER BOOT

i) The CPU is reset, and starts executing the program located in the Boot ROM.
ii) The CPU reads the boot loader binary M_{BL} stored in (unprotected) non-volatile memory, and compute a digest H over that firmware binary using a secure state-of-the-art cryptographic hash function.
   h = HASH(M_{FW})
iii) If h is identical to reference digest value H_{BL}, the CPU executes the boot loader. Otherwise, the CPU halts definitively until next reset.

### MULTI-KEY FIRMWARE BOOT

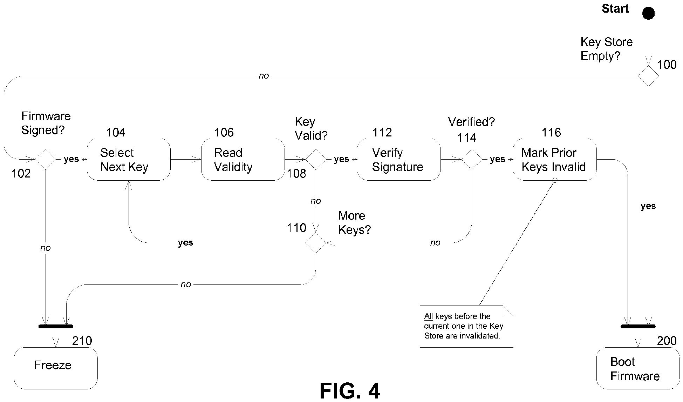

This process is depicted in the flow diagram of Figure 4.

The process begins and it is checked if the key store is empty. If the Key Store is empty, the boot loader loads and executes the firmware immediately 200 without verification. This allows for deployment of new firmware during development.

If the key store is not empty, the CPU loads the firmware and checks to see if the firmware is signed. If the firmware is not signed, the CPU halts definitively (e.g. freezes) 210 until next reset.

If the firmware is signed, the next key is selected.

Information about the validity of the selected key is retrieved by reading the validation data stored in the OTP (e.g. the associated validity bit for the selected key).

Based on the read validation data, it is determined whether the selected key is valid.

If the key is determined to not be valid, it is checked to see if there are more keys. If there are no more keys to be selected, the CPU halts definitively (e.g. freezes) 210 until next reset. However, if there are more keys, the method returns to 104 to select the next key. Thus, the steps of 104-110 find a valid key PKᵢ in the Key Store.

After finding a valid key PKᵢ, the CPU reads the firmware signature S_{FW} and the firmware binary M_{FW} from NV memory, and attempts to verify the firmware signature
{0,1} ← VERIFY_{PK,i}(M_{FW},S_{FW})

Based on the read verification step 112, it is determined whether the firmware signature is verified. If firmware signature is not verified, the process returns to step 110 to see if another key can be selected and used for verification. If the firmware signature is verified, the method proceeds to step 116

The CPU modifies the validation data so as to set the validity bit for all previous keys PKᵢ...PKᵢ₋₁ to "invalid" (only if i > 1), and then executes 200 the firmware located in non-volatile memory.

### Handling End-Of-Life

As will have been seen from the above description, employing multiple signature verification keys in the boot loader addresses the issue of key compromise by invalidating a compromised key and switching to another key. However, there may remain the issue of all keys in the boot loader being compromised.

With no way to change the predetermined set of keys, it may be preferable to employ a concept which permanently disables the system in the situation that all keys have been compromised. This may be referred to as handling the end-of-life of a system. The following two concepts for handling end-of-life are proposed:

### First end-of-life concept - End-Of-Life firmware

The embodiments detailed above with reference to Figures 3 and 4 are not adapted to invalidate the last key in the boot loader key store. Accordingly, it is proposed to address the end-of-life issue (without requiring any change to the standard boot loader process) by employing preliminary preparation before issuing a processing system/device. More particularly, the proposed concept is to grant a special role to the last key in the boot loader key store. Here, the corresponding private key is only used once to sign a special end-of-life firmware, and is then permanently destroyed afterwards. For such embodiments, if the manufacturer wants to terminate a system/device remotely, it simply sends the end-of-life firmware, along with the signature, to the system/device. Since the key is no longer available, there is no risk for key compromise and there is no way to update the device with another firmware.

It is noted that this approach requires updating of both the firmware and the verification keys, which is typically preferred to be avoided. However, for such embodiments this is acceptable since the purpose is termination of the system/device anyway.

The end-of-life firmware may, for example, display a warning message stating that the device can no longer be used, and that the user must contact the device vendor or manufacturer for replacement. The firmware may also delete sensitive data, send confirmation to the issuer host, etc.

Method steps of an exemplary embodiment employing such an end-of-life concept may be summarised as follows (wherein there are no changes to other processes).

### SETUP - END-OF-LIFE

i) Generate an end-of-life private / public key pair {SK_{EOL},PK_{EOL}}
ii) Generate end-of-life firmware M_{FW,EOL}
iii) Compute firmware signature S_{FW,EOL}=Sign_{SK,EOL}(M_{FW,EOL}).
iv) Destroy end-of-life private key SK_{EOL}
v) Add the end-of-life public key PK_{EOL} as the last key in the boot loader key store (this is done before computing the boot loader hash).
vi) Store end-of-life signature in a secure location with strict access control. End-of-life firmware stored as well, but there is no need for strict access control beyond preventing deletion and modification.

### TERMINATE DEVICE

### i) Write the end-of-life firmware M_{FW,EOL} and signature S_{FW,EOL} into device NV memory

It may be preferable to take some precautions in order to avoid denial-of-service attacks.

Since the end-of-life firmware and signature may not be encrypted, they may be easily read by a malicious user if he/she has access to a terminated device. If that user manages to send or write this firmware to other devices that have the same end-of-life verification key in the key store, the user may terminate these devices without consent from the issuer. A proposed concept for addressing this issue is the generation of e a unique end-of-life key pair and signature for each system/device. Each system/device may then have its own version of the end-of-life verification key. After generation, the end-of-life signature for each device will preferably be kept in a secure location with strict access control.

It is noted that the end-of-life firmware may be the same for all the systems/device. In such a situation, whenever the manufacturer/issuer wishes to terminate a system/device, it will send/write the generic end-of-life firmware along with the end-of-life signature corresponding to that particular system/device.

### Second end-of-life concept - Immediate End-Of-Life

An alternative concept may employ a modification of the boot loader process described with reference to Figure 4. Like the first end-of-life concept described above, the second concept grants a special role to the last key in the key store. In this second concept however, when the boot loader successfully verifies a new firmware using the last key in the key store, it will immediately invalidate all the keys in the key store, and then enter an infinite freeze loop. Thus, the new firmware is never executed.

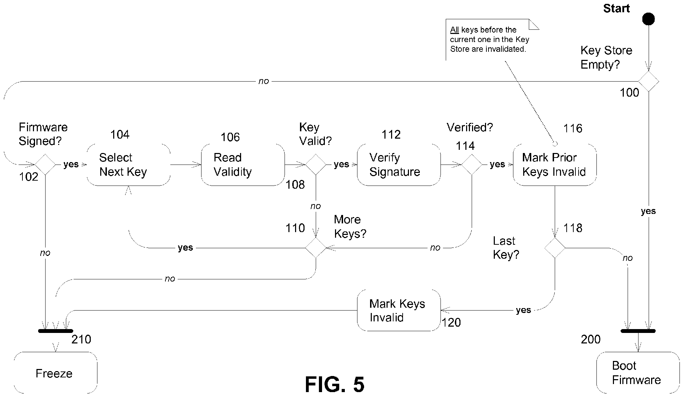

Such a modified boot loader process is depicted in the flow diagram of Figure 5. It will be seen that the modified bootloader process is the same as that depicted in Figure 4 except that it includes an additional steps (steps 118 and 120) after the step 116 of marking prior keys invalid.

More specifically, after step 116 of modifying the validation data so as to set the validity bit for all previous keys PK₁...PKᵢ₋₁ to "invalid" (only if i > 1), step 118 is undertaken in which it is checked if the key is the last key in the key store. If, in step 118, it is determined that the key is not the last key in the key store, the method simply proceeds to step 200 in which the firmware located in non-volatile memory is executed.

If, however, .in step 118, it is determined that the key is the last key in the key store, the method proceeds to step 120 in which all the keys in the key store are invalidated (by modifying the verification data appropriately). After invalidating all of the keys, the method proceeds to step 210 is which the CPU halts definitively (e.g. freezes).

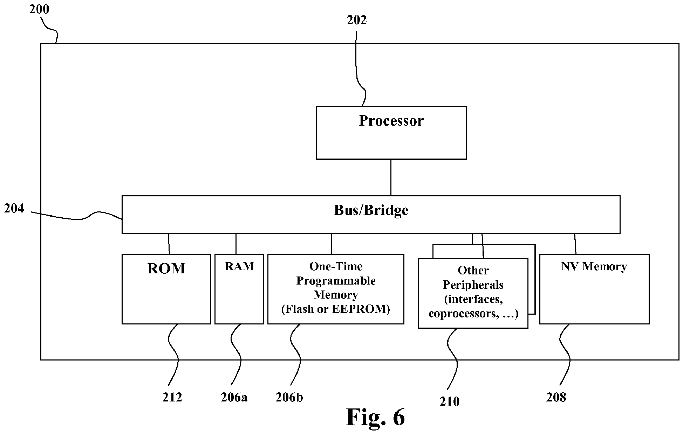

Referring now to Figure 6, there is shown a schematic block diagram of a processing system 200 according to an embodiment of the invention. The system comprises a processor unit or CPU 202 connected to communication bus 204. Also connected to the communication bus 204 are volatile 206 and non-volatile 208 memory units, peripherals 210, and a ROM unit 212.

Here, the ROM unit 212 stores: a firmware boot code sequence for booting/initializing the system 200; secured firmware code to be protected during third-party application execution; and services implementation derived manufacturer internal firmware.

The volatile memory 206 comprises a Random Access Memory (RAM) unit 206a and one-time programmable memory 206b such as flash memory or EEPROM. The RAM unit 206a is for storing data used by the CPU 202 during either boot code execution or application code execution. The one-time programmable memory 206b is adapted to store a hash function and verification data for identifying the validity of keys. The one-time programmable memory 206b may also store firmware code (if not located in the ROM unit 208).

The non-volatile memory unit 208 is adapted to store bootloader code, one or more keys, firmware code, and a file system for the processing system 200. It therefore to be understood that, unlike conventional processing systems, the system 200 of Figure 6 is adapted to employ memory regions like that depicted in Figure 2 wherein a plurality of keys are stored in non-volatile memory and verification data representing the validity of the keys is stored in one-time programmable memory.

Embodiments may be captured in a computer program product for execution on a processor of a computer, e.g. a personal computer or a network server, where the computer program product, if executed on the computer, causes the computer to implement the steps of a method according to an embodiment. Since implementation of these steps into a computer program product requires routine skill only for a skilled person, such an implementation will not be discussed in further detail for reasons of brevity only.

In an embodiment, the computer program product is stored on a computer-readable medium. Any suitable computer-readable medium, e.g. a CD-ROM, DVD, USB stick, memory card, network-area storage device, internet-accessible data repository, and so on, may be considered.

Other variations to the disclosed embodiments can be understood and effected by those skilled in the art in practising the claimed invention, from a study of the drawings, the disclosure, and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measured cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. A method of controlling access of a processing unit (202) of a processing system (200) to firmware code (20) stored by a memory (208) of the processing system (200), the method comprising the steps of:
identifying (106) a valid key stored in a first region (208) of memory based on validation data (40) of a second region (206b) of the memory, the first region (208) of memory storing a plurality of keys, the validation data (40) comprising a flag or bit value for each key indicating whether the key is valid or not, and wherein the second region (206b) of memory comprises one-time programmable memory;
processing the firmware code (20) in accordance with a predetermined verification algorithm to compute a verification value for the firmware code (20);
analysing (112) the verification value and the valid key to determine if the firmware code (20) is trusted; and
controlling access (200, 210) of the processing unit (202) to the firmware code (20) based on whether the firmware code (20) is determined to be trusted or not.

2. The method of claim 1, further comprising the step of:
if it is determined that the firmware code (20) is not trusted, modifying (116) validation data (40) of the second region (206b) of memory to indicate that the key is no longer valid.

3. The method of claim 1 or 2, wherein the step of determining a valid key comprises:
identifying (104) a first key stored in a first region (208) of the memory;
determining (106) if the first key is valid by referring to validation data (40) of the second region (206b) of the memory; and
if it is determined that the first key is valid, identifying the first key as the valid key.

4. The method of claim 3, wherein the step of determining a valid key comprises:
if it is determined that the first key is not valid, identifying (104) a second key stored in the first region (208) of the memory;
determining (106) if the second key is valid by referring to validation data of the second region (206b) of the memory; and
if it is determined that the second key is valid, identifying the second key as the valid key.

5. The method of claim 4, further comprising the step of:
if it is determined that the second key is valid, modifying (116) data of the second region (206b) of memory to indicate that the first key is not valid.

6. The method of any preceding claims, further comprising:
determining if the valid key is an end-of-life key indicating that there are no more valid keys stored in the first region (208) of memory; and
if it is determined that the valid key is an end-of-life key, permanently disabling (210) the processing system (200) so that it can no longer be used.

7. The method of claim 6, wherein the method comprises:
executing end-of-life firmware code (20) to permanently disable the processing system (200); or
invalidating (120) all keys stored in the first region (208) of memory and entering (210) an infinite freeze loop to permanently disable the processing system (200).

8. The method of any preceding claim, wherein the first region (208) of memory comprises non-volatile memory, and wherein the one-time programmable memory of the second region (206b) of memory is configured such that the validation data can be programmed to represent an invalid key, but that it cannot be reprogrammed such that it represents a valid key that has been marked as invalid.

9. The method of any preceding claim, further comprising the preceding step of:
loading program code (20) from trusted memory (212) to the first region (208) of memory,
processing (112) the program code (20) in accordance with a predetermined authentication algorithm to determine if the program code (20) is trusted; and
controlling access (200, 210) of the processing unit (202) to the program code (20) based on whether the program code (20) is determined to be trusted or not.

10. The method of claim 9, wherein the trusted memory (212) comprises read-only memory.

11. A computer program product for controlling access of a processing unit (202) of a processing system (200) to firmware code (20) stored by a memory (208) of the processing system (200), the computer program product comprising a computer-readable storage medium having computer-readable program code embodied therewith, the computer-readable program code configured to perform all of the steps of any preceding claim.

12. A processing system (200) comprising:
a processing unit (202);
memory (208) adapted to store firmware code (20), the memory comprising a first memory region (208) adapted to store a plurality of keys, and a second memory region (206b) adapted to store validation data (40) comprising a flag or bit value for each key indicating whether the key is valid or not, wherein the second region (206b) of memory comprises one-time programmable memory;
a key validation unit adapted to identify (104) a valid key stored in the first memory region (208) based on validation data (40) of the second memory region (206b);
a verification unit adapted to process the firmware code (20) in accordance with a predetermined verification algorithm to compute a verification value for the firmware code (20);
an authentication unit adapted to analyse (112) the verification value and the valid key to determine if the firmware code (20) is trusted; and
an access control unit adapted to control access (200, 210) of the processing unit (202) to the firmware code (20) based on whether the firmware code (20) is determined to be trusted or not.

13. The system (200) of claim 12, wherein the system (200) is adapted to modify (116) data (40) of the second memory region (206b) to indicate that the key is no longer valid if it is determined that the firmware code (20) is not trusted.

14. The system (200) of claim 12 or 13, wherein the key validation unit is adapted to identify (104) a first key stored in a first memory region (208) to determine (106) if the first key is valid by referring to validation data (40) of the second memory region (206b), and to identify the first key as the valid key if it is determined that the first key is valid,
and wherein the key validation unit is further adapted to identify (104) a second key stored in the first memory region (208) if it is determined that the first key is not valid to determine (106) if the second key is valid by referring to validation data (40) of the second memory region (206b), and to identify the second key as the valid key if it is determined that the second key is valid.

15. The system (200) of any of claims 12 to 14, wherein the system (200) is adapted to determine if the valid key is an end-of-life key indicating that there are no more valid keys stored in the first memory region (208), and, if it is determined that the valid key is an end-of-life key, permanently disable (210) the processing system (200) so that it can no longer be used.

## Patentansprüche

1. Ein Verfahren zum Steuern von Zugang einer Verarbeitungseinheit (202) eines Verarbeitungssystems (200) zu Firmware Code (20), gespeichert mittels eines Speichers (208) des Verarbeitungssystems (200), das Verfahren aufweisend Schritte:
Identifizieren (106) eines gültigen Schlüssels, gespeichert in einer ersten Region (208) von Speicher, basierend auf Validierungsdaten (40) einer zweiten Region (206b) des Speichers, wobei die erste Region (208) des Speichers eine Vielzahl an Schlüsseln speichert, wobei die Validierungsdaten (40) ein Kennzeichen oder bit-Wert für jeden Schlüssel aufweisen, angebend ob der Schlüssel gültig ist oder nicht, und wobei die zweite Region (206b) des Speichers einmalprogrammierbaren Speicher aufweist:
Verarbeiten des Firmware Codes (20) gemäß eines vorgegebenen Verifikationsalgorithmus zur Berechnung eines Verifikationswertes für den Firmware Code (20);
Analysieren (112) des Verifikationswertes und des gültigen Schlüssels zum Bestimmen, ob der Firmware Code (20) zuverlässig ist; und
Kontrollieren eines Zugangs (200, 210) der Verarbeitungseinheit (202) zu dem Firmware Code (20), basierend darauf, ob der Firmware Code (20) als zuverlässig oder nicht bestimmt wird.

2. Das Verfahren nach Anspruch 1, ferner aufweisend den Schritt:
wenn bestimmt wird, dass der Firmware Code (20) nicht zuverlässig ist, Modifizieren (116) von Validationsdaten (40) der zweiten Region (206b) des Speichers, um anzugeben, dass der Schlüssel nicht länger gültig ist.

3. Das Verfahren nach Anspruch 1 oder 2, wobei der Schritt des Bestimmens eines gültigen Schlüssels aufweist:
Identifizieren (104) eines ersten Schlüssels, gespeichert in der ersten Region (208) des Speichers:
Bestimmen, ob der erste Schlüssel gültig ist, mittels Bezugnahme auf die Validierungsdaten (40) der zweiten Region (206b) des Speichers; und
wenn bestimmt wurde, dass der Schlüssel gültig ist, Identifizieren des ersten Schlüssels als den gültigen Schlüssel.

4. Das Verfahren nach Anspruch 3, wobei der Schritt des Bestimmens eines gültigen Schlüssels aufweist:
wenn bestimmt wurde, dass der erste Schlüssel ungültig ist, Identifizieren (104) eines zweiten Schlüssels, gespeichert in der ersten Region (208) des Speichers; und
Ermitteln (106), wenn der zweite Schlüssel gültig ist, mittels Bezugnahme auf die Validierungsdaten der zweiten Region (206b) des Speichers; und
wenn bestimmt wurde, dass der zweite Schlüssel gültig ist, Identifizieren des zweiten Schlüssels als den gültigen Schlüssel.

5. Das Verfahren nach Anspruch 4, ferner aufweisend den Schritt:
wenn bestimmt wurde, dass der zweite Schüssel gültig ist, Modifizieren (116) der Daten der zweiten Region (206b) des Speichers, um anzuzeigen, dass der erste Schlüssel ungültig ist.

6. Das Verfahren nach beliebigen vorhergehenden Ansprüchen, zusätzlich aufweisend:
Bestimmen, ob der gültige Schlüssel ein älterer Schlüssel ist, angebend, dass keine weiteren gültigen Schlüssel gespeichert sind in der ersten Region (208) des Speichers; und
wenn bestimmt wurde, dass der gültige Schlüssel ein alter Schlüssel ist, permanentes Außerkraftsetzen (210) des Verarbeitungssystems (200), sodass es nicht länger genutzt werden kann.

7. Die Verfahren nach Anspruch 6, wobei das Verfahren aufweist:
Ausführen von alten Firmware Code (20) zum permanenten Außerkraftsetzung des Verarbeitungssystems (200); oder
Ungültigmachen (120) aller Schlüssel, gespeichert in der ersten Region (208) des Speichers und Einführen einer unendlichen Einfrier-Schleife, zum permanenten Außerkraftsetzen des Verarbeitungssystems (200).

8. Das Verfahren nach irgendeiner der vorherigen Ansprüchen, wobei die erste Region (208) des Speichers nicht-volatile Speicher beinhaltet, und wobei der einmalprogrammierbare Speicher der zweiten Region (206b) des Speichers so konfiguriert ist, dass die Validierungsdaten permanent zum Repräsentieren eines ungültigen Schlüssels programmiert werden können, aber die nicht umprogrammiert werden können, sodass sie einen gültigen Schlüssel repräsentieren, welcher als ungültig markiert wurde.

9. Das Verfahren nach irgendeinem der vorherigen Ansprüche, ferner aufweisend den vorrangegangenen Schritt:
Laden von Programmcode (20) von vertraulichen Speicher (212) zur ersten Region (208) des Speichers,
Verarbeiten (112) des Programmcodes (20) in Übereinstimmung mit einem vorgegebenen Authentifikationsalgorithmus zum Bestimmen, ob der Programmcode (20) zuverlässig ist; und
Kontrollieren von Zugang (200, 210) der Verarbeitungseinheit (202) zum Programmcode (20), basierend darauf, ob der Programmcode (20) als zuverlässig oder nicht bestimmt wurde.

10. Das Verfahren nach Anspruch 9, wobei der zuverlässige Speicher (212) beinhaltet Nurlesespeicher.

11. Ein Computerprogrammprodukt zum Kontrollieren von Zugang einer Verarbeitungseinheit (202) eines Verarbeitungssystems (200) zum Firmware Code (20), gespeichert mittels eines Speichers (208) des Verarbeitungssystems (200), wobei das Computerprogrammprodukt ein vom Computer lesbares Speichermedium aufweist mit computerlesbaren Programmcode darin enthaltend, wobei der computerlesbare Programmcode konfiguriert ist, um alle der Schritte aus irgendeinem vorherigen Anspruch auszuführen.

12. Ein Verarbeitungssystem (200), aufweisend:
eine Verarbeitungseinheit (202);
Speicher (208), geeignet zum Speichern des Firmware Codes (20), wobei der Speicher eine erste Speicherregion (208) aufweist, geeignet zum Speichern einer Vielzahl an Schlüsseln, und eine zweite Speicherregion (206b), geeignet zum Speichen der Validierungsdaten (40), aufweisend ein Kennzeichen oder bit-Wert für jeden Schlüssel, anzeigend, ob der Schlüssel gültig ist oder nicht, wobei die zweite Region (206b) des Speichers einmalprogrammierbaren Speicher beinhaltet;
eine Schlüsselvalidierungseinheit geeignet zur Identifizierung (104) eines gültigen Schlüssels, gespeichert in der ersten Speicherregion (208), basierend auf Validierungsdaten (40) der zweiten Speicherregion (206b);
eine Verifikationseinheit, geeignet zum Ausführen des Firmware Codes (20) in Übereinstimmung mit einem vorbestimmten Verifikationsalgorithmus zum Berechnen eines Verifikationswertes für den Firmware Code (20);
eine Authentifikationseinheit, geeignet zur Analyse (112) des Verifikationswertes und des gültigen Schlüssels zum Bestimmen, ob der Firmware Code (20) zuverlässig ist; und
eine Zugangskontrolleinheit, geeignet zum Kontrollieren von Zugang (200, 210) der Verarbeitungseinheit (202) auf den Firmware Code (20), basierend darauf, ob der Firmware Code (20) als zuverlässig oder nicht bestimmt wurde.

13. Das System (200) nach Anspruch 12, wobei das System (200) geeignet ist zum Modifizieren (116) von Daten (40) der zweiten Speicherregion (206b), um anzuzeigen, dass der Schlüssel nicht länger gültig ist, wenn bestimmt wurde, dass der Firmware Code (20) unzuverlässig ist.

14. Das System (200) nach Anspruch 12 oder 13, wobei die Schlüsselvalidierungseinheit geeignet ist zur Identifizierung (104) eines ersten Schlüssels gespeichert in einer ersten Speicherregion (208), um zu bestimmen (106), ob der erste Schlüssel gültig ist, mittels Bezugnahme auf die Validierungsdaten (40) der zweiten Speicherregion (206b), und zum Identifizieren des ersten Schlüssels als den gültigen Schlüssel, wenn ermittelt wurde, dass der erste Schlüssel gültig ist,
und wobei die Schlüsselvalidierungseinheit ferner geeignet ist zum Identifizieren (104) eines zweiten Schlüssels, gespeichert in der ersten Speicherregion (208), wenn ermittelt wurde, dass der erste Schlüssel ungültig ist, zum Bestimmen, wenn der zweite Schlüssel gültig ist mittels Bezugnahme auf die Validierungsdaten (40) der zweiten Speicherregion (206b), und zur Identifizierung des zweiten Schlüssels als den gültigen Schlüssel, wenn ermittelt wurde, dass der zweite Schlüssel gültig ist.

15. Das System (200) nach den Ansprüchen 12 bis 14, wobei das System (200) geeignet ist zum Bestimmen, ob der gültige Schlüssel ein alter Schlüssel ist, anzeigend, dass keine weiteren gültigen Schüssel gespeichert sind in der ersten Speicherregion (208), und, wenn ermittelt wurde, dass der gültige Schlüssel ein alter Schlüssel ist, permanentes Außerkraftsetzen (210) des Verarbeitungssystems (200), sodass es nicht weiter genutzt werden kann.

## Revendications

1. Procédé de commande de l'accès par une unité de traitement (202) d'un système de traitement (200) à un code micrologiciel (20) mémorisé par une mémoire (208) du système de traitement (200), le procédé comprenant les étapes suivantes:
l'identification (106) d'une clé valide mémorisée dans une première région (208) de mémoire en fonction de données de validation (40) d'une seconde région (206b) de la mémoire, la première région (208) de mémoire mémorisant une pluralité de clés, les données de validation (40) comportant une valeur de fanion ou de bit pour chaque clé indiquant que la clé est valide ou non, et dans lequel la seconde région (206b) de mémoire comprend une mémoire programmable une seule fois;
le traitement du code micrologiciel (20) conformément à un algorithme de vérification prédéterminé pour calculer une valeur de vérification du code micrologiciel (20);
l'analyse (112) de la valeur de vérification et de la clé valide pour déterminer que le code micrologiciel (20) est fiable ou non; et
la commande de l'accès (200, 210) par l'unité de traitement (202) au code micrologiciel (20) selon qu'il est déterminé que le code micrologiciel (20) est fiable ou non.

2. Procédé selon la revendication 1, comprenant en outre l'étape suivante:
s'il est déterminé que le code micrologiciel (20) n'est pas fiable, la modification (116) des données de validation (40) de la seconde région (206b) de mémoire pour indiquer que la clé n'est plus valide.

3. Procédé selon la revendication 1 ou 2, dans lequel l'étape de détermination d'une clé valide comprend:
l'identification (104) d'une première clé mémorisée dans une première région (208) de la mémoire;
la détermination (106) que la première clé est valide par référence aux données de validation (40) de la seconde région (206b) de la mémoire; et
s'il est déterminé que la première clé est valide, l'identification de la première clé comme étant la clé valide.

4. Procédé selon la revendication 3, dans lequel l'étape de détermination d'une clé valide comprend:
s'il est déterminé que la première clé n'est pas valide, l'identification (104) d'une seconde clé mémorisée dans la première région (208) de la mémoire;
la détermination (106) que la seconde clé est valide par référence à des données de validation (40) de la seconde région (206b) de la mémoire; et
s'il est déterminé que la seconde clé est valide, l'identification de la seconde clé comme étant la clé valide.

5. Procédé selon la revendication 4, comprenant en outre l'étape suivante:
s'il est déterminé que la seconde clé est valide, la modification (116) de données de la seconde région (206b) de mémoire pour indiquer que la première clé n'est pas valide.

6. Procédé selon l'une quelconque des revendications précédentes, comprenant en outre:
la détermination que la clé valide est ou non une clé de fin de vie indiquant qu'il n'y a plus de clés valides mémorisées dans la première région (208) de mémoire; et
s'il est déterminé que la clé valide est une clé de fin de vie, la désactivation définitive (210) du système de traitement (200) de manière à ce qu'il ne puisse plus être utilisé.

7. Procédé selon la revendication 6, le procédé comprenant:
l'exécution d'un code micrologiciel (20) de fin de vie pour désactiver définitivement le système de traitement (200); ou
l'invalidation (120) de toutes les clés mémorisées dans la première région (208) de mémoire et le lancement (210) d'une boucle de figeage indéfini pour désactiver définitivement le système de traitement (200).

8. Procédé selon l'une quelconque des revendications précédentes, dans lequel la première région (208) de mémoire comprend une mémoire non volatile, et dans lequel la mémoire programmable une seule fois de la seconde région (206b) de mémoire est configurée de telle sorte que les données de programmation puissent être programmées pour représenter une clé non valide, mais ne puissent pas être reprogrammées de façon à ce qu'elles représentent une clé valide qui a été marquée comme étant non valide.

9. Procédé selon l'une quelconque des revendications précédentes, comprenant en outre l'étape précédente de:
chargement d'un code de programme (20) depuis une mémoire fiable (212) dans la première région (208) de mémoire,
traitement (112) du code de programme (20) conformément à un algorithme d'authentification prédéterminé pour déterminer que le code de programme (20) est fiable ou non; et
la commande de l'accès (200, 210) par l'unité de traitement (202) au code de programme (20) selon qu'il est déterminé que le code de programme (20) est fiable ou non.

10. Procédé selon la revendication 9, dans lequel la mémoire fiable (212) comprend une mémoire morte.

11. Produit de programme informatique pour commander l'accès par une unité de traitement (202) d'un système de traitement (200) à un code micrologiciel (20) mémorisé par une mémoire (208) du système de traitement (200), le produit de programme informatique comprenant un support de mémorisation lisible par ordinateur dans lequel est intégré un code de programme lisible par ordinateur, le code de programme lisible par ordinateur étant configuré pour exécuter toutes les étapes de l'une quelconque des revendications précédentes.

12. Système de traitement (200) comprenant:
une unité de traitement (202);
une mémoire (208) adaptée pour mémoriser un code micrologiciel (20), la mémoire comprenant une première région de mémoire (208) adaptée pour mémoriser une pluralité de clés, et une seconde région de mémoire (206b) adaptée pour mémoriser des données de validation (40) comprenant une valeur de fanion ou de bit pour chaque clé indiquant que la clé est valide ou non, dans lequel la seconde région (206b) de mémoire comprend une mémoire programmable seule fois;
une unité de validation de clé adaptée pour identifier (104) une clé valide mémorisée dans la première région de mémoire (208) en fonction de données de validation (40) de la seconde région de mémoire (206b);
une unité de vérification adaptée pour traiter le code micrologiciel (20) conformément à un algorithme de vérification prédéterminé pour calculer une valeur de vérification du code micrologiciel (20);
une unité d'authentification adaptée pour analyser (112) la valeur de vérification et la clé valide pour déterminer que le code micrologiciel (20) est fiable ou non; et
une unité de commande d'accès adaptée pour commander l'accès (200, 210) par l'unité de traitement (202) au code micrologiciel (20) selon qu'il est déterminé que le code micrologiciel (20) est fiable ou non.

13. Système (200) selon la revendication 12, le système (200) étant adapté pour modifier (106) des données (40) de la seconde région de mémoire (206b) pour indiquer que la clé n'est plus valide s'il est déterminé que le code micrologiciel (20) n'est pas fiable.

14. Système (200) selon la revendication 12 ou 13, dans lequel l'unité de validation de clé est adaptée pour identifier (104) une première clé mémorisée dans une première région de mémoire (208) pour déterminer (106) que la première clé est valide ou non par référence à des données de validation (40) de la seconde région de mémoire (206b), et pour identifier la première clé comme étant la clé valide s'il est déterminé que la première clé est valide,
et dans lequel l'unité de validation de clé est adaptée en outre pour identifier (104) une seconde de clé mémorisée dans la première région de mémoire (208) s'il est déterminé que la première clé n'est pas valide pour déterminer que la seconde clé est valide ou non par référence à des données de validation (40) de la seconde région de mémoire (206b), et pour identifier la seconde clé comme étant la clé valide s'il est déterminé que la seconde clé est valide.

15. Système (200) selon l'une quelconque des revendications 12 à 14, dans lequel le système (200) est adapté pour déterminer que la clé valide est ou non une clé de fin de vie indiquant qu'il n'y a plus de clés valides mémorisées dans la première première région de mémoire (208), et, s'il est déterminé que la clé valide est une clé de fin de vie, désactiver définitivement (210) le système de traitement (200) de manière à ce qu'il ne puisse plus être utilisé.
